# EUROPÄISCHE PATENTSCHRIFT

(11) **EP 0 508 105 B1**
(45) Veröffentlichungstag und Bekanntmachung des Hinweises auf die Patenterteilung: **12.07.1995**
(21) Anmeldenummer: 92103796.6
(22) Anmeldetag: 05.03.1992
(51) Int. Cl.: B62J 9/00

(54) **Reisetankrucksack für ein Motorrad**
Motorcycle tank rucksack
Sacoches de réservoir pour motocyclette

(30) Priorität: 05.03.1991 DE 4107008; 05.03.1991 DE 9102622 U
(43) Veröffentlichungstag der Anmeldung: 14.10.1992
(73) Patentinhaber: HELD-HANDSCHUHE GmbH, D-87545 Burgberg (DE)
(72) Erfinder: Held, Erhard, W-8978 Burgberg/Allgäu (DE)
(74) Vertreter: von Bezold, Dieter, Dr.

(56) Entgegenhaltungen:
- EP-A- 0 044 414
- DE-A- 2 831 481
- DE-A- 3 228 626
- US-A- 4 059 207
- US-A- 4 068 859

## Beschreibung

Die Erfindung betrifft einen Reisetankrucksack mit den im Oberbegriff des Anspruchs 1 angegebenen Merkmalen.

Ein Reisetankrucksack, der aus einem Prospekt der Fa. HELD-Handschuhe GmbH, 87545 Burgberg (DE), bekannt ist, hat ein durch einen Reißverschluß mit der eigentlichen Tanktasche ("Taschenteil") verbundenes Unterteil ("Bodenplatte"), das an seinen Längsseiten jeweils eine streifenartige Verlängerung aufweist, in der sich Permanentmagnete befinden, mit denen die Bodenplatte an den Seiten eines aus ferromagnetischem Material bestehenden Tanks angebracht werden kann. Die Oberseite des Taschenteils weist ein transparentes Kartenfach auf.

Weiterhin ist aus der EP-A-0 044 414 ein Tankrucksack bekannt, der sich je nach benötigtem Volumen vergrößern oder verkleinern läßt, indem die nicht benötigten Bereiche nach innen gefaltet und die verbleibenden Teile mit einem umlaufenden Reißverschluß verbunden werden. Auf diese Weise läßt sich dieser Tankrucksack auf drei verschiedene Größen einstellen. Auf der Oberseite des Tankrucksacks ist eine Kartentasche eingearbeitet, so daß der Fahrer auf einer Tour die Landkarte im Blickfeld hat. Der Tankrucksack ist ferner mit einer Bodenplatte versehen, die mit Riemen am Motorradtank befestigt werden kann und von der er mit Hilfe eines umlaufenden Reißverschlußes abgenommen werden kann, wenn die Maschine gepackt wird.

Aus der DE 2 831 481 A1 ist eine auf dem Tank eines Motorrads anbringbare Tasche bekannt, die über einen umlaufenden Reißverschluß mit einer Bodenplatte verbunden ist, in welche Permanentmagnete eingearbeitet sind, so daß die Bodenplatte auf dem Tank fest haftet. Auch hier kann beim Parken der Maschine die Tasche mitgenommen werden. Schließlich ist aus der US-A 4-068 859 eine Tankschutzhülle für ein Motorrat bekannt, die um den Tank herumgelegt und unter ihm verschnürrt wird und dem Motorradfahrer einen festen Schenkelschluß mit der Maschine in unwegsamem Gelände ermöglichen soll. Auf der Oberseite dieser Tankschutzhülle oder -decke ist ein Kartenfach für eine Landkarte vorgesehen.

Es sind auch Packtaschen bekannt, die durch Saugnäpfe oder durch Spannriemen auf dem Tank befestigt werden können.

Der Erfindung liegt die Aufgabe zugrunde, einen variablen Reisetankrucksack für ein Motorrad zu schaffen, welcher dem Fahrer bei jeder Benutzungsart die Möglichkeit gibt, eine Landkarte im Blickfeld zu haben.

Diese Aufgabe wird durch die im Kennzeichenteil des Anspruchs 1 angegebenen Merkmale gelöst. Weiterbildungen der Erfindung sind in den Unteransprüchen gekennzeichnet.

Durch die Erfindung wird ein Reisetankrucksack für Motorräder geschaffen, der eine Bodenplatte mit Mitteln zum Befestigen auf dem Tank des Motorrades und einen mit der Bodenplatte lösbar verbundenen Taschenteil aufweist und bei dem auch ohne die voluminöse Packtasche eine Kartentasche verfügbar ist, da die vom eigentlichen Taschenteil lösbare flache Bodenplatte ebenfalls als Kartentasche ausgebildet ist, so daß für kürzere Fahrten zwar eine Kartentasche, nicht jedoch eine Packtasche mitgeführt werden muß. Bei mehrteiligen Tankrucksäcken ist jeder Taschenteil oben mit einer Kartentasche versehen.

Vorzugsweise weist die Bodenplatte eine Saugnapf- oder eine Magnethalterung zur Befestigung der Packtasche auf dem Tank des Motorrads auf. Das Taschenteil ist vorzugsweise mit Gurthalterungen, die abnehmbar sein können, zur Befestigung des Taschenteils auf dem Sozius- oder Rücksitz des Motorrads versehen. Dieser Aspekt der Erfindung, der ein wahlweises Anbringen der Packtasche auf dem Tank oder auf einem Soziussitz ermöglicht, ist unabhängig davon, ob die Bodenplatte eine Kartentasche aufweist oder nicht.

Bei dem vorliegenden Reisetankrucksack kann je nach Bedarf die "Kartenfach-Bodenplatte" allein auf dem Tank benutzt werden, wobei dann der Taschenteil zuhause gelassen oder auf dem Rücksitz befestigt werden kann, oder man kann den mit der Bodenplatte verbundenen Taschenteil auf dem Tank befestigen, wobei dann die übliche, auf der Oberseite des Taschenteils befindliche Kartentasche zur Verfügung steht.

Im folgenden wird ein Ausführungsbeispiel der Erfindung unter Bezugnahme auf die Zeichnungen näher erläutert. Es zeigen:
- Fig.1: ein Motorrad bei dem eine als Kartentasche ausgebildete Bodenplatte eines erfindungsgemäßen Reisetankrucksacks auf dem Tank und ein Taschenteil des Reisetankrucksacks auf dem Rücksitz angeordnet ist;
- Fig.2: eine Draufsicht auf die Bodenplatte des Reisetankrucksacks,
- Fig.3: eine Draufsicht auf die Unterseite der des Reisetankrucksacks zusammengeklappten Seitenteilen der Bodenplatte, und
- Fig.4: eine vergrößerte Ansicht einer bevorzugten Spanngurthalterung.

Der vorliegende Tankrucksack enthält in üblicher Weise einen ein- oder mehrteiligen Taschenteil 10, der durch geeignete Verbindungsmittel, zum Beispiel durch einen teilbaren Reißverschluß 11, lösbar mit einer Bodenplatte 12 verbunden ist. Die im wesentlichen aus einem starken Polyamidgewebe oder dergl. bestehende, gepolsterte Bodenplatte 12 hat zwei ausklappbare Seitenteile 12a, welche bei der dargestellten Ausführungsform näherungsweise dreieckig sind und jeweils zwei kreisscheibenförmige flache Permanentmagnete 14 enthalten, die in abgesteppten, gefütterten Taschen der Bodenplatte 12 untergebracht sind. In dem sich unter dem Taschenteil befindlichen Bereich der Bodenplatte ist vorzugsweise vorne ein weiterer scheibenförmiger Permanentmagnet untergebracht. Der Taschenteil 10 kann vorne mit einer kleinen Vortasche 18 und hinten mit einem Tragegriff 20 versehen sein.

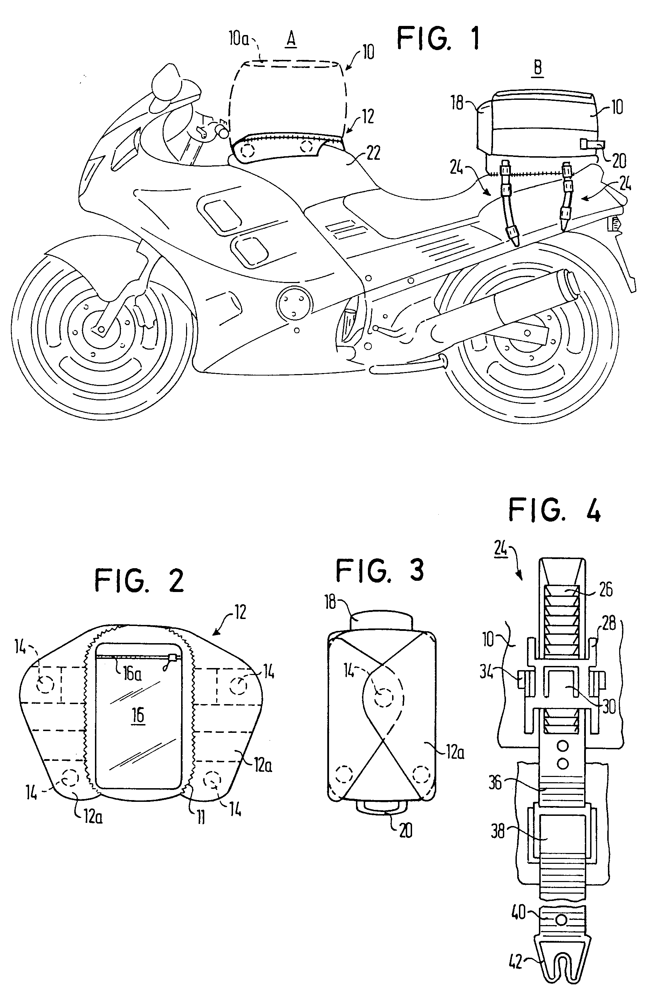

Wie Figur 2 zeigt, befindet sich auf der Oberseite der Bodenplatte 12 ein Kartenfach 16 aus einer transparenten Kunststoffolie, das z.B. durch einen Reißverschluß 16a zugänglich ist.

Mit den Magneten können die Kartentaschen-Bodenplatte allein (wie in Fig. 1 bei A dargestellt ist) oder der ganze Reisetankrucksack 10-12, wie in Figur 1 gestrichelt angedeutet ist, auf einem aus ferromagnetischen Material bestehenden Tank 22 des Motorrades befestigt werden.

An der Oberseite des Taschenteils 10 ist vorzugsweise, wie bekannt, ebenfalls ein Kartenfach 10a vorgesehen.

Bei abgenommenem Reisetankrucksack 10-12 können die Seitenteile 12a zusammengeklappt werden, wie es in Fig.3 dargestellt ist. Die in der Nähe der Spitze der dreieckförmigen Seitenteile angeordneten Permanentmagnete 14 kommen dabei übereinander zu liegen und sind so gepolt, daß sie sich anziehen und die Seitenteile in der zusammengeklappten Stellung halten.

Vorzugsweise sind am Taschenteil zusätzlich zu der oben beschriebenen Magnethalterung noch Gurthalterungen vorgesehen, mit denen der ganze Reisetankrucksack 10-12 oder nur der Taschenteil 10 auf dem Rücksitz des Motorrades befestigt werden kann, wie es in Fig.1 bei B dargestellt ist. Bei der dargestellten Ausführungsform sind auf jeder Seite des Taschenteiles 10 zwei Gurthalterungen 24 vorgesehen.

Eine bevorzugte Ausführungsform der Gurthalterungen ist in Fig.4 dargestellt. Die dort dargestellte Gurthalterung enthält ein streifenförmiges Steckerteil 26, das in ein am Taschenteil 10 angebrachtes Schloß 28 einsteckbar ist und sägezahnartige Rasten aufweist, die mit einer Zunge 30 des Schloßes zusammenwirken, so daß das Steckerteil 26 zum Spannen des Riemens eingeschoben werden kann, durch die Zunge jedoch am Zurückgleiten gehindert wird. Zum Lösen und Entfernen des Steckerteils aus dem Schloß kann die Zunge 30 durch Drücken auf seitliche Betätigungsglieder 34 angehoben werden.

Das Steckerteil ist über ein kurzes Gurtstück 36 mit einer Klemmschnalle 38 verbunden, in der ein längeres Gurtstück 40 eingeklemmt ist, an dessen Ende ein Haken 42 zum Einhängen am Rande eines Kotflügels oder dergleichen angebracht ist. Die Klemmschnalle 38 ermöglicht eine grobe Verstellung der Länge der Riemenhalterung und das eigentliche Spannen und Festzurren erfolgt dann durch Einschieben des Steckerteils 26 in das Schloß 28.

Bei Fahrt mit Sozius wird der Reisetankrucksack 10-12 auf dem Tank befestigt, wie bei A gestrichelt dargestellt ist, wobei das Steckerteil 26 mit dem Riemenstück 40 aus dem Schloß 28 entfernt und zum Beispiel in der Vortasche 18 untergebracht wird. Für Landkarten etc. steht dann das Kartenfach 10a auf der Oberseite des Taschenteils zur Verfügung. Bei Fahrt ohne Sozius wird die Kartentaschen-Bodenplatte 12 auf dem Tank befestigt und der Taschenteil 10 kann hinten auf den Rücksitz geschnallt werden, wie es bei B in Fig.1 dargestellt ist.

Die Bodenplatte 12 kann auch mit anderen Befestigungsmitteln, z.B. mit Saugnäpfen oder mit Gurthalterungen, die dann vorzugsweise, wie oben beschrieben, abnehmbar sind, versehen sein.

Wenn der Tankrucksack dreiteilig ist, d.h. eine Bodenplatte und zwei durch einen Reißverschluß miteinander verbundene Taschenteile enthält, kann der untere Taschenteil auch mit den zusätzlichen Gurten auf dem Rücksitz befestigt werden und der obere Taschenteil mit dem Reißverschluß an der Bodenplatte angebracht werden.

## Patentansprüche

1. Reisetankrucksack für ein Motorrad,
- mit einer Bodenplatte (12), die mit Mitteln zur Be festigung auf dem Tank des Motorrades versehen ist
- mindestens einem Taschenteil (10), der lösbar mit der Bodenplatte (12) zu verbinden ist,
- einem Kartenfach (10a), auf der Oberseite des Taschenteils
**dadurch gekennzeichnet**,
daß auf der Oberseite jedes Taschenteils und der Bodenplatte (12) ein Kartenfach (16) angeordnet ist.

2. Reisetankrucksack nach Anspruch 1, **dadurch gekennzeichnet**, daß die Befestigungsmittel der Bodenplatte eine Saugnapfhalterung zur Befestigung auf dem Tank des Motorrades enthalten.

3. Reisetankrucksack nach Anspruch 1, **dadurch gekennzeichnet**, daß die Befestigungsmittel der Bodenplatte (12) eine Magnethalterung (14) zur Befestigung auf dem Tank (22) des Motorrades enthalten.

4. Reisetankrucksack nach Anspruch 3, **dadurch gekennzeichnet**, daß die Bodenplatte (12) zwei Seitenteile (12a) aufweist, die jeweils mindestens einen Permanentmagneten (14) enthalten, der so angeordnet ist, daß die nach innen zusammengeklappten Seitenteile (12a, Fig.3) durch die Permanentmagneten zusammengehalten werden.

5. Reisetankrucksack nach Anspruch 4, **dadurch gekennzeichnet**, daß die Seitenteile (12a) näherungsweise dreieckig sind und daß die genannten Permanentmagneten (14) in der Nähe der freien Spitze der dreieckigen Seitenteile (12a) angeordnet sind.

6. Reisetankrucksack nach einem der Ansprüche 1 bis 5, **dadurch gekennzeichnet**, daß der Taschenteil (10) zusätzliche Gurthalterungen (24) aufweist.

## Claims

1. Motorcycle tank rucksack,
- with a base panel (12) provided with means for fastening it on the tank of the motorcycle,
- with at least one bag section (10), which may be detachably connected to the base panel (12),
- with a map pocket (10a) on the top of the bag section, characterised in that a map pocket (16) is provided on the top of each bag section and the base panel (12).

2. Tank rucksack according to Claim 1, characterised in that the fastening means on the base panel contain a sucker holder for fastening on the tank of the motorcycle.

3. Tank rucksack according to Claim 1, characterised in that the fastening means on the base panel (12) contain a magnetic holder (14) for fastening on the tank (22) of the motorcycle.

4. Tank rucksack according to Claim 3, characterised in that the base panel (12) has two side sections (12a), each containing at least one permanent magnet (14), which is arranged so that the inwardly folded side sections (12a, Figure 3) are held together by the permanent magnets.

5. Tank rucksack according to Claim 4, characterised in that the side sections (12a) are approximately triangular, and that the specified permanent magnets (14) are arranged in the vicinity of the triangular side sections (12a).

6. Tank rucksack according to one of Claims 1 to 5, characterised in that the bag section (10) has additional belt mountings (24).

## Revendications

1. Sacoche de voyage pour réservoir d'une motocyclette, comportant une base (12) qui est pourvue de moyens de fixation sur le réservoir de la motocyclette, au moins une partie formant sac (10) qui est destinée à être reliée à la base (12) d'une manière séparable, et une poche à carte sur la face supérieure de la partie formant sac (10), caractérisée en ce qu'une poche à carte (16) est disposée sur la face supérieure de chaque partie formant sac (10) et de la base (12).

2. Sacoche de voyage pour réservoir suivant la revendication 1 caractérisée en ce que les moyens de fixation de la base comportent un dispositif de retenue à ventouses pour la fixation sur le réservoir de la motocyclette.

3. Sacoche de voyage pour réservoir suivant la revendication 1 caractérisée en ce que les moyens de fixation de la base (12) comportent un dispositif de retenue à aimants permanents (14) pour la fixation sur le réservoir (22) de la motocyclette.

4. Sacoche de voyage pour réservoir suivant la revendication 3 caractérisée en ce que la base (12) présente deux parties latérales (12a) qui comportent chacune au moins un aimant permanent (14) disposé de telle façon que les parties latérales repliées ensemble vers l'intérieur (12a figure 3) soient maintenues ensemble par les aimants permanents.

5. Sacoche de voyage pour réservoir suivant la revendication 4 caractérisée en ce que les parties latérales (12a) ont une forme sensiblement triangulaire et en ce que les aimants permanents (14) sont situés à proximité des sommets libres des parties latérales (12a) de forme triangulaire.

6. Sacoche de voyage pour réservoir suivant l'une quelconque des revendications 1 à 5 caractérisée en ce que la partie formant sac (10) présente un dispositif de retenue additionnel à courroies (24).
